# EUROPEAN PATENT APPLICATION

(11) **EP 4 668 348 A2**
(43) Date of publication of application: **24.12.2025**
(21) Application number: 25183772.0
(22) Date of filing: 18.06.2025
(51) Int. Cl.: H01M 4/04, H01M 10/04

(54) **MANUFACTURING SYSTEM AND MANUFACTURING METHOD OF A RECHARGEABLE BATTERY**

(30) Priority: 21.06.2024 KR 20240081390
(71) Applicant: SAMSUNG SDI CO., LTD., Yongin-si, Gyeonggi-do 17084 (KR)
(72) Inventor: SON, Seojin, 17084 Gyeonggi-do (KR)
(74) Representative: Maiwald GmbH

(57) **Abstract**

A manufacturing system (100A, 100B, 100C) of a rechargeable battery may include a transporting device (110) configured to transport a substrate (B), a coating device (120) configured to apply a slurry to the substrate (B), a pressurizing device (130) including a pressurizing member (131A, 131B) located spaced apart from the transporting device (110) and having a size corresponding to the slurry applied to the substrate (B), and a driving member (134) configured to move the pressurizing member (131A, 131B) toward the slurry or away from the slurry, and configured to pressurize the slurry so that a thickness of the slurry may become uniform, and a drying device (140) configured to dry the pressurized slurry.

## Description

### BACKGROUND

### 1. Field

The present disclosure relates to a manufacturing system and manufacturing method of a rechargeable battery.

### 2. Description of the Related Art

Rechargeable batteries are manufactured to have various shapes, and among them, a pouch battery includes an electrode assembly having a separator (which is an insulator) interposed between positive and negative electrode plates, and a thin flexible pouch in which the electrode assembly is embedded. That is, the pouch accommodates the electrode assembly in its inner space.

The electrode assembly of rechargeable batteries is generally divided into a winding type (or kind) and a stacking type (or kind) based on its structure. The stacking type (or kind) has good structural safety and excellent space utilization, so it is widely applied to small and medium-sized batteries. In a stacking type (or kind) rechargeable battery, a plurality of electrodes and separators are stacked together.

During the manufacturing method of a rechargeable battery, a slurry is supplied and then dried by a drying device.

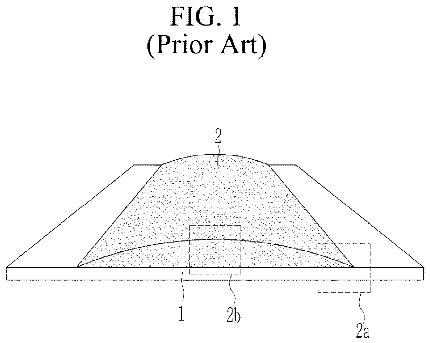

FIG. 1 is a perspective view showing a substrate and an active material layer manufactured by the related art manufacturing method of a rechargeable battery.

Referring to FIG. 1, if (e.g., when) a slurry 2 is applied on a substrate 1, a thickness of an edge portion 2a of the slurry 2 may be formed relatively thin (e.g., thinner) compared to a central portion 2b, due to the surface tension. In this state, the slurry 2 may be dried by a drying process, thereby forming an active material layer.

In the finally dried electrode plate, a fine space (e.g., a gap) may be generated between the edge portion of the active material layer and a separator. Accordingly, lithium salt may occur (e.g., be accumulated) in the fine space between the active material layer and separator, causing a short circuit.

### SUMMARY

Aspects according to one or more embodiments of the present disclosure are directed toward a manufacturing system and manufacturing method of a rechargeable battery capable of minimizing or reducing a thickness difference between an edge portion and a central portion of an active material layer.

However, the technical problem to be solved by the present disclosure is not limited to the above, and other objects not mentioned herein will be understood from the following description by those skilled in the art. Additional aspects will be set forth in part in the description which follows and, in part, will be apparent from the description, or may be learned by practice of the presented embodiments of the disclosure.

According to one or more embodiments of the disclosure, a manufacturing system of a rechargeable battery may include a transporting device configured to transport a substrate, a coating device configured to apply a slurry to the substrate, a pressurizing device including a pressurizing member located spaced apart from the transporting device and having a size corresponding to the slurry applied to the substrate, and a driving member configured to move the pressurizing member toward the slurry or away from the slurry, and configured to pressurize the slurry so that a thickness of the slurry may become uniform, and a drying device configured to dry the pressurized slurry.

The pressurizing device may further include a support member located adjacent to the substrate and on an opposite side of the substrate from the pressurizing member.

The pressurizing member may be a glass plate.

The pressurizing member may include a base portion, and a hydrophobic coating portion on a portion of the base portion that is in contact with the slurry, the hydrophobic coating portion having a hydrophobic functional group.

The hydrophobic coating portion may be coated on an entire outer surface of the base portion.

The hydrophobic functional group is selected from the group consisting of fluorine and silane.

A manufacturing system of a rechargeable battery may further include a distance measurement member located between the coating device and the pressurizing device, and configured to measure a distance to the substrate, and a first control unit configured to set a descending distance of the pressurizing member based on a distance data measured by the distance measurement member.

A distance between the distance measurement member and the transporting device may be the same as a distance between the pressurizing member and the transporting device.

A manufacturing system of a rechargeable battery may further include a thickness measurement member located between the pressurizing device and the drying device, and configured to measure the thickness of the slurry after being pressurized by the pressurizing device, and a second control unit configured to reset a descending distance of the pressurizing member based on the thickness measured by the thickness measurement member.

According to one or more embodiments of the present disclosure, a manufacturing method of a rechargeable battery may include preparing a substrate, coating a slurry on the substrate, pressurizing the slurry so that a thickness of the slurry may become uniform, and drying the slurry.

A manufacturing system of a rechargeable battery may further include measuring a distance to the substrate and setting a descending distance of a pressurizing member for pressurizing the slurry based on the distance measured by the measuring of the distance.

A manufacturing system of a rechargeable battery may further include measuring the thickness of the slurry, and resetting a descending distance of a pressurizing member for pressurizing the slurry based on the thickness measured by the measuring of the thickness.

The measuring of the thickness may be performed after the pressurizing.

According to the present disclosure, because a manufacturing system of a rechargeable battery may include a pressurizing device, the thickness difference between the edge portion and the central portion of the active material layer may be minimized or reduced. Accordingly, using the manufacturing system of a rechargeable battery, the entire electrode plate may be manufactured to be uniform compared to the related art manufacturing device.

Accordingly, the local increase of the thickness of the active material layer may be prevented or reduced, and thereby the stack planarity of the electrode plate may be significantly improved. Therefore, an interval (e.g., gap) between an edge portion of an active material layer and the separator does not occur in the finally dried electrode plate, thereby preventing or reducing the generation of lithium salt within the gap.

### BRIEF DESCRIPTION OF THE DRAWINGS

The accompanying drawings illustrate example embodiments of the present disclosure and together with the foregoing disclosure, serve to provide further understanding of the technical features of the present disclosure, and thus, the present disclosure is not construed as being limited to the drawings.
FIG. 1 is a perspective view showing a substrate and an active material layer manufactured by the related art manufacturing method of a rechargeable battery.
FIG. 2 is a perspective view showing a rechargeable battery.
FIG. 3 is a cross-sectional view showing a substrate and an active material layer used for manufacturing the electrode plate included in the electrode assembly of the rechargeable battery of FIG. 2.
FIG. 4 is a schematic illustration showing a manufacturing system of a rechargeable battery according to a first embodiment.
FIG. 5 is a schematic illustration showing a state of the manufacturing system of FIG. 4 in which a pressurizing device has pressurized the slurry.
FIG. 6 is a perspective view showing the manufacturing system of FIG. 5 in which the substrate, the slurry, and the pressurizing member have been extracted from the manufacturing system.
FIG. 7 is a perspective view showing a pressurizing member included in a manufacturing system of a rechargeable battery according to an example variation.
FIG. 8 is a schematic illustration showing a manufacturing system of a rechargeable battery according to a second embodiment.
FIG. 9 is a schematic illustration showing a manufacturing system of a rechargeable battery according to a third embodiment.
FIG. 10 is a flow chart showing a manufacturing method of a rechargeable battery according to a first embodiment.
FIG. 11 is a flow chart showing a manufacturing method of a rechargeable battery according to a second embodiment.
FIG. 12 is a flow chart showing a manufacturing method of a rechargeable battery according to a third embodiment.

### DETAILED DESCRIPTION

Hereinafter, embodiments of the present disclosure will be described in more detail with reference to the accompanying drawings. It should be understood that terms and words used in the specification and the appended claims should not be construed as having common and dictionary meanings, but should be interpreted as having meanings and concepts corresponding to technical concepts of the present disclosure in view of the principle that the inventor can properly define the concepts of the terms and words in order to describe his/her own invention as best as possible. Therefore, embodiments disclosed in the present specification and the constructions depicted in the drawings are only example embodiments of the present disclosure, and do not cover the entire scope of the present disclosure.

It will be further understood that the terms "comprise," "include," "comprising," and/or "including," if (e.g., when) used in this specification, specify the presence of stated features, numbers, steps, operations, elements, components, and/or groups, but do not preclude the presence or addition of one or more other features, numbers, steps, operations, elements, components, and/or groups.

In addition, in order to help with understanding of the present disclosure, the accompanying drawings are not drawn to scale, and the dimensions of some components may be exaggerated. In addition, the same reference numerals may be assigned to the same elements in different embodiments.

If (e.g., when) it is explained that two objects are "identical", this refers to that these objects are "substantially identical". Accordingly, the substantially identical objects may include deviations considered low in the art, for example, deviations within 5 %. In addition, if (e.g., when) it is explained that certain parameters are uniform in a set or predetermined region, this may refer to that the parameters are uniform in terms of (e.g., with respect to) an average value in the corresponding region.

Although the terms "first", "second", and the like are used to describe various elements, these elements are not limited by these terms. These terms are used to distinguish one element from another, and unless stated to the contrary, a first element may be a second element.

Throughout the specification, unless stated otherwise, each element may be singular or plural.

If (e.g., when) an element is described as "above (or under)" or "on (or below)" another element, the element can be on an upper surface (or a lower surface) of the other element, and intervening elements may be present therebetween (e.g., between the element and the other element on (or below) the element).

In addition, if (e.g., when) an element is referred to as being "connected", "coupled" or "linked" to another element, the element can be directly connected, coupled or linked to the other element, but it should be understood that intervening elements may be present therebetween (e.g., between the two elements), or the two elements may be "connected", "coupled" or "linked" to each other through another element.

The term "and/or" as used herein includes any one or all combinations of the associated listed items. In addition, the use of "may" if (e.g., when) describing the embodiments of the present disclosure relates to "one or more embodiments of the present disclosure". Expressions such as "one or more" if (e.g., when) preceding a list of elements may modify the entire list of elements and may not modify individual elements of the list.

Throughout the specification, if (e.g., when)the expression "A and/or B" indicates A, B, or A and B, unless specifically stated to the contrary, and if (e.g., when)the expression "C to D" indicates C or higher and D or lower, unless specifically stated to the contrary.

A phrase may refer to any and all suitable combinations if (e.g., when) the phrase such as "at least one of A, B and C", "at least one of A, B or C", "at least one selected from the group A, B and C", "at least one selected from among A, B and C", or "at least one selected from A, B and C" is used to specify a list of the elements A, B, and C and may indicate only a, only b, only c, both (e.g., simultaneously) a and b, both (e.g., simultaneously) a and c, both (e.g., simultaneously) b and c, all of a, b, and c, or variations thereof.

The term "use" may be considered synonymous with the term "utilize". That is, terms such as "use," "using," and "used" may be considered synonymous with terms "utilize," "utilizing," and "utilized," respectively. As used herein, the terms such as "substantially," "about," and similar terms may be used as a term of approximation rather than a term of degree, and may be used to account for an inherent variation in a measured or calculated value which is to be recognized by those skilled in the art.

In this specification, although the terms "first," "second," "third," etc., may be used to describe various elements, components, regions, layers and/or sections, these elements, components, regions, layers and/or sections should not be limited by these terms. These terms may be used to distinguish one element, component, region, layer or cross section from another element, component, region, layer or cross section. Accordingly, a first element, component, region, layer, or section discussed below may be named a second element, component, region, layer, or section without departing from the teachings of the embodiments.

For ease of explanation, a spatial relative term such as "beneath," "below," "lower," "above," "upper," or the like may be used herein in order to describe a relationship between one element or feature and another element(s) or feature(s), as shown in the drawings. Spatial relative position is to be understood to encompass different directions of a device in use or operation in addition to directions shown in the drawings. For example, if (e.g., when) the device in the drawing is turned over, an element described as "below" or "beneath" another element may be understood to be "above" the other element. Therefore, the term "below" may encompass both upward and downward directions.

The terms used herein are intended to describe the embodiments of the present disclosure and are not intended to limit the present disclosure.

Prior to describing a manufacturing system of a rechargeable battery according to an embodiment, a rechargeable battery that can be manufactured by using a manufacturing system of a rechargeable battery according to an embodiment will be described.

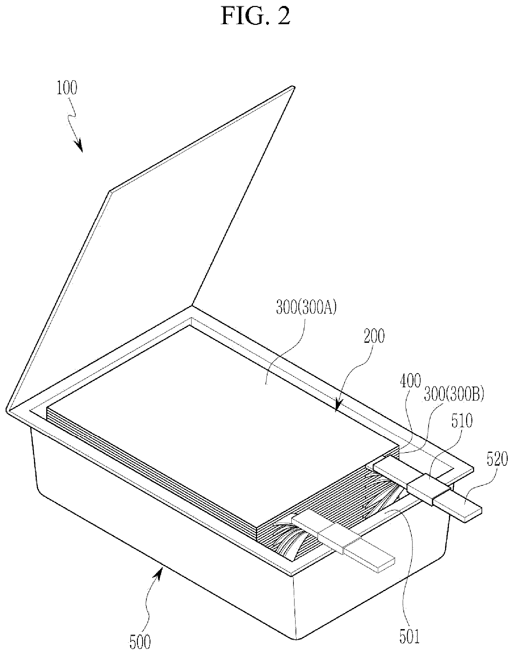

FIG. 2 is a perspective view showing the rechargeable battery.

Referring to FIG. 2, a rechargeable battery 100 may include an electrode assembly 200 and a case 500.

The electrode assembly 200 may include a plurality of electrode plates 300A and 300B and a separator 400. In more detail, the plurality of electrode plates 300A and 300B may include a first electrode plate 300A and a second electrode plate 300B.

The electrode assembly 200 may be in the form in which laminates including the first electrode plate 300A, the second electrode plate 300B, and the separator 400 are repeatedly wound or stacked.

In one or more embodiments, the electrode assembly 200 may be a stacked type (or kind), in which the electrode plates 300A and 300B are disposed to be stacked in multiple layers. In one or more embodiments, the electrode assembly 200 may be of a repeatedly wound jelly-roll type (or kind). In the present disclosure, the electrode assembly 200 of the stacked type (or kind) will be described as an example.

In one or more embodiments, the manufacturing process of the electrode assembly 200 of the stacking type (or kind) generally includes a first stacking process and a second stacking process.

In the first stacking process (e.g., the primary stack process), full negative electrodes (e.g., full anodes) and full positive electrodes (e.g., full cathodes) may be stacked. As used herein, the "full negative electrode" and the "full positive electrode" are ones in which the active material layer is applied to both surfaces of a substrate, and the "half negative electrode" is one in which the active material layer is located on only one surface of the substrate. Here, all negative electrode plates may be full negative electrodes except for (e.g., excluding) a first electrode plate 300A, which is the outermost electrode plate among a plurality of first electrode plates 300A. In addition, all second electrode plates 300B may be full positive electrodes.

In the second stacking process (e.g., the secondary stack process), a half negative electrode may be stacked on one side of at least one or both of the outermost sides, based on a stacking direction. Here, the half negative electrode may be the outermost first electrode plate 300A among the first electrode plates 300A.

FIG. 2 illustrates, merely for convenience, an example of the electrode assembly 200 in which the half negative electrode is stacked on an outermost upper side of the electrode assembly 200, however, it may be possible that the half negative electrode is stacked on each of an outermost upper side and outermost bottom side of the electrode assembly 200.

The separator 400 may be interposed between the first electrode plate 300A and the second electrode plate 300B. The separator 400 may prevent or substantially prevent a short circuit of the first electrode plate 300A and the second electrode plate 300B, and may allow movement of lithium ions. For this purpose, the separator 400 may be formed in a size relatively greater than the first electrode plate 300A and the second electrode plate 300B.

The separator 400 may include a porous polymer film or a porous non-woven fabric. Here, the porous polymer film may be configured in a single layer or multiple layers including a polyolefin-based polymer such as ethylene polymer, propylene polymer, ethylene/butene copolymer, ethylene/hexene copolymer, and/or ethylene/methacrylate copolymer. The porous non-woven fabric may include glass fiber, polyethylene terephthalate fiber, and/or the like, with a high melting point. However, the present disclosure is not limited thereto, and depending on embodiments, the separator may be a high heat-resistive separator containing ceramic (e.g., ceramic coated separator (CCS)).

The separator 400 may be cut into unit lengths and disposed between the first electrode plate 300A and the second electrode plate 300B, or one separator 400 formed in a ribbon shape may be disposed between the first electrode plate 300A and the second electrode plate 300B, in a zigzag form. Alternatively, the separator 400 may be installed to be wound along a first direction between the first electrode plate 300A and the second electrode plate 300B.

The arrangement form of the separator 400 is not limited to a particular form, but in the present embodiment, merely for convenience in the description, it is assumed that the separator 400 is cut into the unit lengths and disposed between the first electrode plate 300A and the second electrode plate 300B.

The case 500 may accommodate the electrode assembly 200. The electrode assembly 200 described above may be accommodated in the case 500 together with an electrolyte.

Here, the electrolyte may be a non-aqueous electrolyte. The electrolyte may include a lithium salt and an organic solvent. The organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

Meanwhile, the case 500 may be one of a pouch type (or kind), a cylindrical type (or kind), and a prismatic type (or kind). The case 500 of the pouch type (or kind) may be manufactured by bending an exterior material of a plate shape, and then pressing or drawing one surface, to have a recess on the one surface.

The electrode assembly 200 may be accommodated in the recess. A sealing portion 501 is provided on the exterior circumference of the recess, and while the electrode assembly 200 is accommodated in the recess, the sealing portion 501 may be sealed through a method such as heat fusion.

Meanwhile, in the plurality of electrode plates, the first electrode plate 300A described above may be a negative electrode, and the second electrode plate 300B may be a positive electrode, or vice versa. The first electrode plate 300A and the second electrode plate 300B may be electrically connected to the outside of the rechargeable battery 100 through a strip terminal 520.

In addition, an insulation tape 510 may be attached to a portion of the strip terminal 520 that is in contact with the case 500. The insulation tape 510 may prevent or substantially prevent electrical conductivity between the strip terminal 520 and the case 500.

Meanwhile, the rechargeable battery 100 that can be manufactured by using a manufacturing system of a rechargeable battery according to an embodiment is not necessarily limited to the above structure.

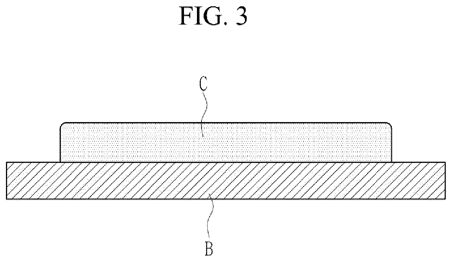

FIG. 3 is a cross-sectional view showing a substrate and an active material layer used for manufacturing the electrode plate included in the electrode assembly of the rechargeable battery of FIG. 2.

Referring to FIG. 3, in the manufacturing process of the electrode plate included in the electrode assembly, the electrode plate may be manufactured by applying an active material layer C on a substrate B.

The substrate B may be a current collector, and the current collector may include a suitable (e.g., known) conductive material, as long as that it does not cause chemical reaction within the rechargeable battery. For example, the current collector may include one of stainless steel, nickel (Ni), aluminum (Al), titanium (Ti), copper (Cu), and an alloy thereof, and may be provided in various forms such as film, sheet, foil, or the like.

In one or more embodiments, the substrate B may include a current collector (e.g., a coated region) and an uncoated region.

The active material layer C may be applied to at least one surface of the current collector. The active material layer C may be applied to a remaining portion excluding an edge region of the current collector. The edge region of the current collector may be the uncoated region to which the active material layer C is not applied.

The active material layer C may be located in a portion of at least one surface of the substrate B, and may have an end portion formed in multiple stages. An edge of the active material layer C may be located to be spaced apart from the edge of the substrate B. In one or more embodiments, a protection film may be attached to the boundary portion between the active material layer C and the substrate B.

A method for locating (e.g., coating or depositing) the active material layer C on the substrate B may be, for example, a method using a slit coater M, but the present disclosure is not limited thereto, and various suitable slurry (active material) coating methods may be used.

A magnetizer according to an embodiment may be used to magnetize the slurry discharged by the slit coater M.

In one or more embodiments, the active material layer C may further include a binder and a conductive material.

The binder may mediate (e.g., facilitate) coupling between the substrate B and the active material, thereby improving mechanical stability of the electrode. For example, the binder may be an organic binder or an aqueous binder, and may be used together with a thickener such as carboxymethyl cellulose (CMC). For example, the organic binder may be one of vinylidene fluoride-hexafluoropropylene copolymer (PVDF-co-HFP), polyvinylidene fluoride (PVDF), polyacrylonitrile, and polymethylmethacrylate, and the aqueous binder may be styrene-butadiene rubber (SBR), but the present disclosure is not limited thereto.

The conductive material may improve the electrical conductivity of the rechargeable battery. The conductive material may include a metal-based material. For example, the conductive material may include a suitable (e.g., typical) carbon-based conductive material. For example, the conductive material may include one of graphite, carbon black, graphene, and carbon nanotube. In an embodiment, the conductive material may include carbon nanotube, but the present disclosure is not limited thereto.

Hereinafter, a manufacturing system of a rechargeable battery according to a first embodiment that can manufacture the electrode plate will be described in more detail with reference to the drawings.

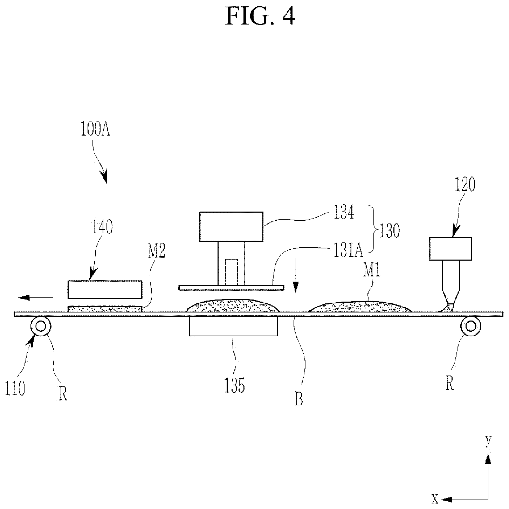

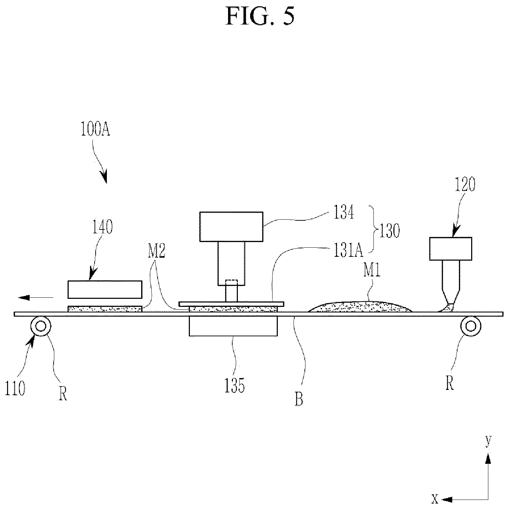

FIG. 4 is a schematic illustration showing a manufacturing system of a rechargeable battery according to a first embodiment, and FIG. 5 is a schematic illustration showing a state of the manufacturing system of a rechargeable battery of FIG. 4 in which a pressurizing device has pressurized the slurry.

Referring to FIG. 4 and FIG. 5, a manufacturing system of a rechargeable battery 100A according to a first embodiment may include a transporting device 110, a coating device 120, a pressurizing device 130 and a drying device 140.

The transporting device 110 may transport the substrate B. For this purpose, the transporting device 110 may be, for example, an apparatus configured to transport the substrate B in a roll-to-roll manner. A metal foil that can be used as the substrate B of the electrode plate of the rechargeable battery may be transported in a first direction, by being in contact with a plurality of rollers R.

The transporting device 110 may transport the substrate B in an x-axis direction (e.g., the first direction). For example, the transporting device 110 may transport the substrate B from the right side to the left side, based on the directions shown in the drawings.

The coating device 120 may apply a slurry M1 to the substrate B. The coating device 120 may be, for example, a slit coater. In an embodiment, the slit coater may include a nozzle having one or more outlets.

The slit coater may coat the slurry precisely and with uniform thickness and area. The slit coater may be supplied with the slurry from the slurry storage unit, and the slurry is coated by being injected into the nozzle, and then being spread over the substrate B through the outlets.

The pressurizing device 130 may pressurize the slurry M1 such that a thickness of the slurry M1 may become uniform. That is, the pressurizing device 130 may apply pressure to (e.g., press on) the slurry M1 to flatten the profile of the slurry M1 deposited on the substrate B such that a thickness of the slurry M1 becomes uniform. For this purpose, the pressurizing device 130 may include, for example, a pressurizing member 131A and a driving member 134.

The pressurizing member 131A may be located spaced apart from the transporting device 110, and may be formed in a size corresponding to the slurry M1 applied to the substrate B. The pressurizing member 131A may be, for example, a glass plate. Alternatively, as another example, the material of the pressurizing member 131A may be reinforced plastic or metal.

The driving member 134 may move the pressurizing member 131A toward the slurry M1 or away from the slurry M1. Any suitable member that can ascend and descend the pressurizing member 131A, e.g., a pneumatic cylinder, a hydraulic cylinder, and a linear motor, in the y-axis direction may be used as the driving member 134.

The pressurizing member 131A may descend by the driving member 134 by a set or predetermined descending distance. If (e.g., when) the pressurizing member 131A pressurizes the slurry M1, thicknesses of an edge portion and a central portion of the slurry M1 may become uniform.

The drying device 140 may dry a pressurized slurry M2. The drying device 140 may be, for example, one or more heaters. The heater may be installed to be spaced apart from the substrate B. The heater may be located on an upper side or lower side of the substrate B based on the directions shown in the drawings. The heater can dry the slurry by converting electrical energy to thermal energy.

In one or more embodiments, the pressurizing device 130 may further include a support member 135.

The support member 135 may be located on an opposite side of the pressurizing member 131A based on the substrate B, and may be located adjacent to the substrate B. A shape of the support member 135 may be, for example, a block shape. A portion in the support member 135 that is adjacent to the pressurizing member 131A may be formed in a size corresponding to the pressurizing member 131A.

If (e.g., when) the pressurizing member 131A pressurizes the slurry M1, the support member 135 may prevent or substantially prevent the substrate B from being bent by a pressure of the pressurizing member 131A.

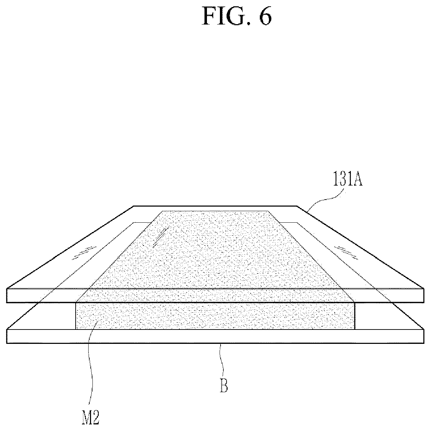

As shown in FIG. 6, a manufacturing system of a rechargeable battery 100A (see FIG. 4) according to the first embodiment described above pressurizes the slurry M1 (see FIG. 4) applied to the substrate B by the pressurizing member 131A, and thereby, the overall thickness of the pressurized slurry M2 may become uniform. Accordingly, the local increase of the thickness the active material layer may be prevented, and accordingly, the stack planarity of the electrode plate may be significantly improved. That is, as a result of the pressurizing act by the pressurizing device 130, the profile of the slurry M1 is flattened and accordingly, the thickness of the active material layer becomes uniform from the central portion to the edge portion, and as a result, the electrode plates may have an improved planarity individually and as a stack.

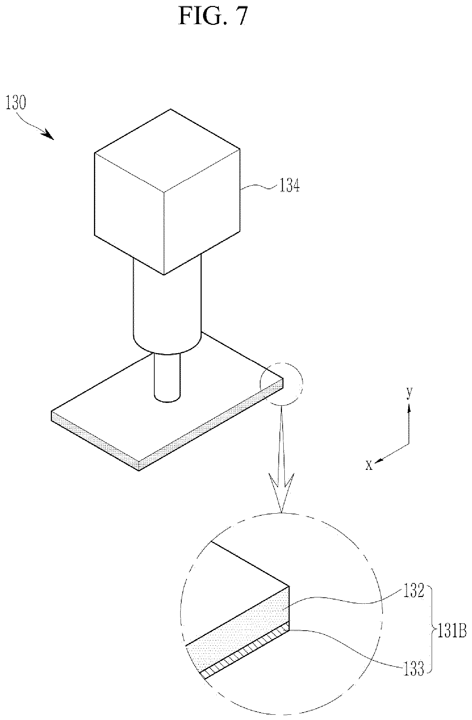

FIG. 7 is a perspective view showing the pressurizing member included in a manufacturing system of a rechargeable battery according to an example variation.

Referring to FIG. 7, as an example variation, a pressurizing member 131B may include a base portion 132 and a hydrophobic coating portion 133.

The base portion 132 may be formed in a plate shape, and may be a body of the pressurizing member 131B.

The hydrophobic coating portion 133 may have a hydrophobic functional group, and may be coated on a portion of the base portion 132 that is in contact with the slurry M1 (see FIG. 4). Alternatively, the hydrophobic coating portion 133 may be coated on the entire outer surface of the base portion 132.

The hydrophobic functional group may be selected from the group consisting of fluorine and silane.

In the present disclosure, the term "hydrophobic" refers to relatively higher hydrophobicity compared to the substrate B (see Fig. 4), obtained through atomic layer deposition (ALD). That is, hydrophobic refers to having a larger contact angle compared to the substrate B (see Fig. 4). For example, the hydrophobic layer formed by the hydrophobic treatment may have a contact angle of 45° or more, or a contact angle of 60° or more and 130 degrees or less.

In an embodiment of the present disclosure, in order to introduce a hydrophobic group into the interior of the base portion 132, hydrophobic treatment can be performed by introducing a precursor compound having a hydrophobic group in a vapor phase into the base portion 132 by the ALD method and generating a hydrophobic group by the ALD method. The hydrophobic layer generated by the hydrophobic treatment can form a film for hydrophobicity with a thickness on the order of angstroms (Å).

The precursor compound introduced for the above hydrophobic treatment has a hydrophobic functional group, and the hydrophobic functional group may be at least one selected from the group consisting of fluorine and silane. The precursor having such a hydrophobic functional group may be a precursor including at least one of compounds including a leaving group such as a halogen, an amine, or an alkoxy group, and having a hydrophobic functional group selected from fluorinated hydrocarbon and silane.

If (e.g., when) the pressurizing member 131B according to a variation (e.g., including the hydrophobic coating portion) pressurizes and then moves away from the slurry M1 (see FIG. 4), it may be separated from the slurry M1 (see FIG. 4) more easily than if (e.g., when) the pressurizing member 131B is made of the glass plate described above is used.

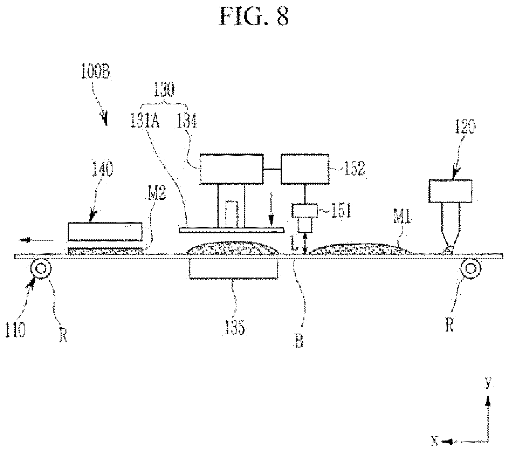

FIG. 8 is a schematic illustration showing a manufacturing system of a rechargeable battery according to a second embodiment.

Referring to FIG. 8, a manufacturing system of a rechargeable battery 100B according to a second embodiment may further include a distance measurement member 151 and a first control unit 152.

The distance measurement member 151 may be located between the coating device 120 and the pressurizing device 130, and may measure a distance to the substrate B. For this purpose, a distance between the distance measurement member 151 and the transporting device 110 may be the same as a distance between the pressurizing member 131A and the transporting device 110. The distance measurement member 151 may be, for example, a laser sensor, but the present disclosure is not limited thereto.

The first control unit 152 may set a descending distance of the pressurizing member 131A based on a distance data measured by the distance measurement member 151.

A thickness of the active material layer has been determined during the process of designing the rechargeable battery. Here, the thickness of the active material layer may be the thickness of the pressurized slurry.

If (e.g., when) the distance measurement member 151 measures the distance L to the surface of the substrate B, the distance by which the pressurizing member 131A should descend may be calculated.

For example, if the thickness of the active material layer is determined as 1 mm, if (e.g., when) a distance between the distance measurement member 151 and the substrate B is 10 mm, the first control unit 152 may set the descending distance of the pressurizing member 131A to 9 mm.

As described above, a manufacturing system of a rechargeable battery 100B according to a second embodiment may include the distance measurement member 151 and the first control unit 152. Accordingly, even if sagging occurs in the substrate B, or a distance between the pressurizing member 131A and the substrate B slightly changes after assembly tolerance or maintenance work of the secondary battery manufacturing system 100B, the thickness of the pressurized slurry can always be maintained constant.

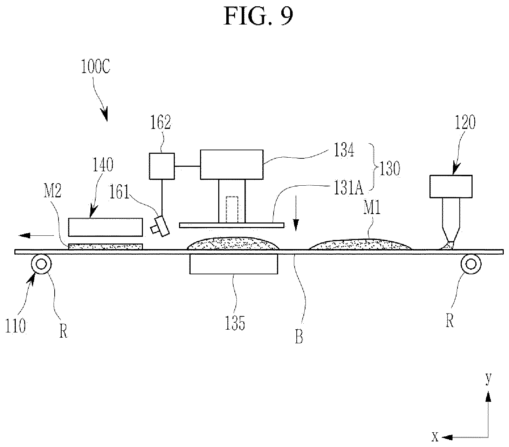

FIG. 9 is a schematic illustration showing a manufacturing system of a rechargeable battery according to a third embodiment.

Referring to FIG. 9, a manufacturing system 100C of a rechargeable battery according to a third embodiment may further include a thickness measurement member 161 and a second control unit 162.

The thickness measurement member 161 may be located between the pressurizing device 130 and the drying device 140, and may measure a thickness of the pressurized slurry M2 (i.e., the slurry M1 after being pressurized) by the pressurizing device 130. For this purpose, the thickness measurement member 161 may be, for example, a camera, but the present disclosure is not limited thereto.

The second control unit 162 may reset the descending distance of the pressurizing member 131A based on a thickness data measured by the thickness measurement member 161.

For example, if (e.g., when) the thickness value of the pressurized slurry M2 obtained by the thickness measurement member 161 is greater than a target thickness, the second control unit 162 may increase the descending distance of the pressurizing member 131A by a difference between the target thickness and the thickness value of the pressurized slurry M2.

To the contrary, if (e.g., when) the thickness value of the pressurized slurry M2 obtained by the thickness measurement member 161 is smaller than the target thickness, the second control unit 162 may decrease the descending distance of the pressurizing member 131A by a difference between the target thickness and the thickness value of the pressurized slurry M2.

The manufacturing system 100C of a rechargeable battery according to the third embodiment may maintain the thickness of the slurry M1 at the target thickness.

Hereinafter, a manufacturing method of a rechargeable battery by using the manufacturing system of a rechargeable battery described above with reference to the drawings will be described.

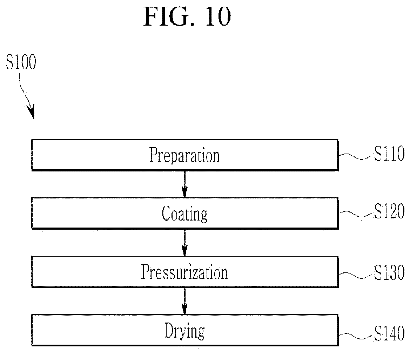

FIG. 10 is a flow chart showing the manufacturing method of a rechargeable battery according to a first embodiment.

Referring to FIG. 10, a manufacturing method of a rechargeable battery S100 according to a first embodiment may include a step (e.g., act) S110 of preparation, a step (e.g., act) S120 of coating, a step (e.g., act) S130 of pressurization, and a step (e.g., act) S140 of drying.

In the step (e.g., act) S110 of preparation, the substrate may be prepared. As described above, the substrate may be transported by the transporting device.

In the step (e.g., act) S120 of coating, the slurry may be coated on the substrate. As described above, the slurry may be coated on the substrate by the coating device.

In the step (e.g., act) S130 of pressurization, the slurry may be pressurized such that the thickness of the slurry may become uniform. The slurry may be pressurized by the pressurizing device.

In the step (e.g., act) S140 of drying, the slurry may be dried. The slurry may be dried by the drying device.

At the step (e.g., act) S130 of pressurization, the manufacturing method of a rechargeable battery S100 according to the present disclosure pressurizes the slurry applied to the substrate, and thereby, the active material layer may be formed uniformly over the entire surface. Accordingly, the local increase of the thickness the active material layer may be prevented or reduced, and the stack planarity of the electrode plate may be significantly improved.

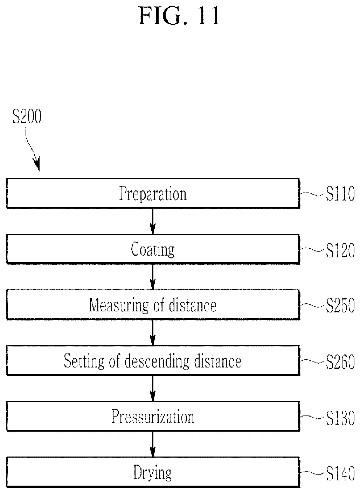

FIG. 11 is a flow chart showing the manufacturing method of a rechargeable battery according to a second embodiment.

Referring to FIG. 11, the manufacturing method of a rechargeable battery S200 according to a second embodiment may include a step (e.g., act) S250 of distance measuring and a step (e.g., act) S260 of setting a descending distance.

The step (e.g., act) S250 of distance measuring may measure a distance L (see FIG. 8) to the substrate.

The step (e.g., act) S260 of setting the descending distance may set the descending distance of the pressurizing member for pressurizing the slurry based on a distance data measured by the step (e.g., act) S250 of distance measuring.

Accordingly, even if sagging occurs in the substrate B, or a distance between the pressurizing member and the substrate is changed, the thickness of the pressurized slurry can always be maintained constant.

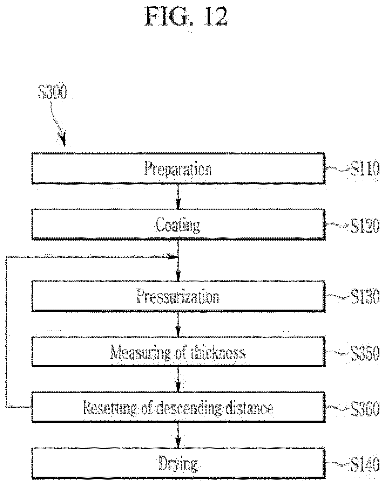

FIG. 12 is a flow chart showing the manufacturing method of a rechargeable battery according to a third embodiment.

Referring to FIG. 12, the manufacturing method of a rechargeable battery S300 according to a third embodiment may include a step (e.g., act) of thickness measuring and a step (e.g., act) S360 of resetting a descending distance.

At the step (e.g., act) S350 of thickness measuring, the thickness of the pressurized slurry is measured. The step (e.g., act) S350 of the thickness measuring may be performed after performing the step (e.g., act) S130 of pressurization.

At the step (e.g., act) S360 of resetting the descending distance, the descending distance of the pressurizing member for pressurizing the slurry may be reset based on a thickness data measured by the step (e.g., act) S350 of thickness measuring.

The manufacturing method S300 of a rechargeable battery according to the third embodiment includes the step (e.g., act) S350 of thickness measuring and the step (e.g., act) S360 of resetting the descending distance, and thereby the thickness of the slurry may be maintained at the target thickness.

Each step (e.g., act) of the manufacturing method of a rechargeable batteries S100, S200, and S300 according to the present disclosure has been described with respect to a manufacturing system 100A, 100B, and 100C of a rechargeable battery, as described above, and duplicate descriptions is not repeated.

While this disclosure has been described in connection with what is presently considered to be practical embodiments, the drawings and the detailed description of the present disclosure which are described above are merely illustrative, are just used for the purpose of describing the present disclosure, and are not used for qualifying the meaning or limiting the scope of the present disclosure, which is disclosed in the appended claims. Therefore, it will be understood by those skilled in the art that various modifications may be made from the present disclosure. Accordingly, an actual technical protection scope of the present disclosure is to be defined by the claims.

### Description of symbols

| | | | |
|---|---|---|---|
| 100A, 100B, 100C: | man ufacturing system of a rechargeable battery | | |
| 110: | transporting device | 120: | coating device |
| 130: | pressurizing device | 131A, 131B: | pressurizing member |
| 132: | base portion | 133: | hydrophobic coating portion |
| 134: | driving member | 135: | support member |
| 140: | drying device | 151: | distance measurement member |
| 152: | first control unit | 161: | thickness measurement member |
| 162: | second control unit | M1: | coated slurry |
| M2: | pressurized slurry | B: | substrate |
| C: | active material layer | | |

## Claims

1. A manufacturing system (100A, 100B, 100C), comprising:
a transporting device (110) configured to transport a substrate (B);
a coating device (120) configured to apply a slurry to the substrate (B);
a pressurizing device (130) comprising a pressurizing member (131A, 131B) located spaced apart from the transporting device (110) and having a size corresponding to the slurry applied to the substrate (B), and a driving member (134) configured to move the pressurizing member (131A, 131B) toward the slurry or away from the slurry, and configured to pressurize the slurry so that a thickness of the slurry is uniform; and
a drying device (140) configured to dry the slurry;
wherein the manufacturing system (100A, 100B, 100C) is for a rechargeable battery.

2. The manufacturing system as claimed in claim 1, wherein the pressurizing device (130) further comprises a support member located adjacent to the substrate (B) and on an opposite side of the substrate (B) from the pressurizing member (131A, 131B).

3. The manufacturing system as claimed in any one of the preceding claims, wherein the pressurizing member (131A, 131B) is a glass plate.

4. The manufacturing system as claimed in any one of the preceding claims, wherein the pressurizing member (131A, 131B) comprises:
a base portion; and
a hydrophobic coating portion on a portion of the base portion that is in contact with the slurry, the hydrophobic coating portion comprising a hydrophobic functional group.

5. The manufacturing system as claimed in claim 4, wherein the hydrophobic coating portion is coated on an entire outer surface of the base portion.

6. The manufacturing system as claimed in claim 4 or 5, wherein the hydrophobic functional group is selected from the group consisting of fluorine and silane.

7. The manufacturing system as claimed in any one of the preceding claims, further comprising:
a distance measurement member located between the coating device (120) and the pressurizing device (130), and configured to measure a distance to the substrate (B); and
a first control unit configured to set a descending distance of the pressurizing member (131A, 131B) based on a distance data measured by the distance measurement member.

8. The manufacturing system as claimed in claim 7, wherein a distance between the distance measurement member and the transporting device (110) is the same as a distance between the pressurizing member (131A, 131B) and the transporting device (110).

9. The manufacturing system as claimed in any one of the preceding claims, further comprising:
a thickness measurement member located between the pressurizing device (130) and the drying device (140), and configured to measure the thickness of the slurry after being pressurized by the pressurizing device (130); and
a second control unit configured to reset a descending distance of the pressurizing member (131A, 131B) based on the thickness measured by the thickness measurement member.

10. A manufacturing method of a rechargeable battery, the method comprising:
preparing (S110) a substrate (B);
coating (S120) a slurry on the substrate (B);
pressurizing (S130) the slurry so that a thickness of the slurry is uniform; and
drying (S140) the slurry.

11. The manufacturing method as claimed in claim 10, further comprising:
measuring (S250) a distance to the substrate (B), and
setting (S260) a descending distance of a pressurizing member (131A, 131B) for pressurizing the slurry based on the distance measured by the measuring of the distance.

12. The manufacturing method as claimed in claim 10 or 11, further comprising:
measuring (S350) the thickness of the slurry; and
resetting (S360) a descending distance of a pressurizing member (131A, 131B) for pressurizing the slurry based on the thickness measured by the measuring of the thickness.

13. The manufacturing method as claimed in claim 12, wherein the measuring of the thickness is performed after the pressurizing.
